(19)

Europäisches
Patentamt

European
Patent Office

Office européen
des brevets

(11) **EP 2 740 931 A1**

(12) **EUROPEAN PATENT APPLICATION**

(43) Date of publication:
**11.06.2014 Bulletin 2014/24**

(51) Int Cl.:
**F03D 3/06** $^{(2006.01)}$

(21) Application number: **13196130.2**

(22) Date of filing: **06.12.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.12.2012 IT PD20120369**

(71) Applicant: **Wind Twentyone S.r.l.
35020 Albignasego (PD) (IT)**

(72) Inventors:
• **Raciti Castelli, Marco**
  **I-31100 Treviso (IT)**
• **Benini, Ernesto**
  **I-35038 Torreglia (PD) (IT)**

(74) Representative: **Gallo, Luca
Gallo & Partners S.r.l.
Via Rezzonico, 6
35131 Padova (IT)**

(54) **Blade for vertical-axis wind turbine and vertical-axis wind turbine**

(57)    Blade for vertical-axis wind turbine, comprising a central body (5) that is extended along a longitudinal extension line (1) substantially helical around an axis (Z) with an aerodynamic profile (P) orthogonal thereto, between an upper end (5'), defined by a horizontal upper end section ($S_s$) orthogonal to the vertical axis (Z) and tilted with respect to the longitudinal extension line (1), and a lower end (5"), defined by a horizontal lower end section ($S_i$) orthogonal to the vertical axis (Z) and tilted with respect to the longitudinal extension line (1). Each of the blades (3) further comprises two appendages (6) respectively connected to the upper end (5') and lower end (5 ") of the central body (5) and each being extended along a radial direction (R) substantially orthogonal to the vertical axis (Z) towards the central rotation shaft (2) starting from a root end (7) defined by a root section (7'), lying on a plane substantially vertical and orthogonal to the radial direction (R).

The appendages (6) are connected to the upper end (5') and lower end (5") of the central body (5) by means of respective connector portions (9), each of which is extended between the horizontal upper end section ($S_s$) or lower end section ($S_i$) of the central body (5) and the root section (7) of the corresponding appendage (6).

Also forming the object of the invention is a vertical-axis turbine comprising two or more blades according to the present invention.

**Fig. 1**

Printed by Jouve, 75001 PARIS (FR)

EP 2 740 931 A1

## Description

The present invention relates to a blade for vertical-axis wind turbine and a vertical-axis wind turbine according to the preamble of the respective independent claims.

The vertical-axis turbine and the relative wind blade according to the present invention are adapted to be employed for transforming, in a *per se* conventional manner, the kinetic energy of the wind into mechanical energy and then into electrical energy with a high aerodynamic efficiency.

The vertical-axis wind turbine and the relative blade, object of the present invention, are therefore inserted in the technological field of renewable energies and, more particularly, in the industrial field of the production of wind generators.

### State of the art

As is known, the need of electrical energy from renewable resources, including wind energy, has increased over the years, especially due to the increase of the costs of fossil fuels as well as due to the environmental requirements for preventing the emission of pollutants.

Such circumstance has determined an important impulse in the development of wind turbines with the object of electrical energy production, such turbines currently present on the market in two different types with horizontal axis and with vertical axis.

In particular, the large size turbines operating in the most recent wind plants are generally of the type with horizontal axis and, more frequently, with three-blade rotor.

In order to reduce or prevent the formation of vortical air flows at the free ends of the blades, due to the difference of pressure between the extrados and the intrados of the blade profile - such vortical air flows reducing the rotor power coefficient of a turbine-horizontal-axis turbines have been designed in recent years that are provided with blades equipped with terminal appendages, in the jargon of the field termed "winglet". Horizontal-axis turbines comprising blades provided with terminal appendages are for example described in the patents US 2009/257885, US 7,997,875 and US 8,029,241. The above-described blades of the turbines are formed by a main body connected to the shaft of the turbine and by an appendage connected to the free end of the main body by means of a connector portion. More in detail, the connector portions provided in the blades of known type are extended between the end section of the main body and the root section from which the appendage departs; such end section and root section are arranged substantially at 90° from each other.

Such appendages, which have already been employed for some time in the aeronautical field, in addition to improving the performances of the wind turbines allow reducing the acoustic emissions thereof.

Recently, there has also been a renewed interest for the vertical-axis wind turbines, which are easier to apply in the small-size installations, with the objective of decentralizing the production of electrical energy from large plants to cities and rural communities.

Indeed, the vertical-axis turbines have several advantages with respect to horizontal-axis turbines, the most significant of which is constituted by the independence of the operation from the wind origin direction, which facilitates the use thereof in very populated areas, generally characterized by winds with inconstant direction.

Among the vertical-axis wind turbines, the type "with lift" is known on the market; the most well-known embodiment thereof is constituted by the Darrieus turbine with the name of the inventor G. J. M. Darrieus who, in 1931, filed the patent application thereof in the United States with No. US 1,835,018. Such turbine, as described in the aforesaid patent, comprises a vertical rotation shaft and a plurality of blades, substantially rigid, mechanically coupled at their upper and lower ends to the shaft in order to rotate it and generate electrical energy in a conventional manner by means of a current generator coupled to the rotation shaft. Each blade has the shape of an elongated body which is substantially extended with semicircular arc between its two ends and has section configured with wing profile, constant for its entire longitudinal extension. Such wing profile is defined, in a *per se* known manner, by a dorsal surface and a ventral surface which are extended from the leading edge to the trailing edge of the air flow. The different pressures produced by the air flow on the surfaces of the wing profile determine fluid-dynamic forces acting on the profile itself, which can be split into a lift component, responsible for the rotation of the turbine, and a resistance component.

The known turbines, of the type described above, have several drawbacks, including a not particularly high efficiency, the formation of air vortices which in addition to not allowing the attainment of high efficiency, as stated, also cause irritating noise, as well as the generation of undesired twisting torques along the extension of the blades due to the sudden and repetitive passage of the blades themselves between angular work positions, in which the latter interfere with the flow of the wind by generating a lift component responsible for the rotation of the blade, and rest positions, in which the blades are traversed by the air flow without however generating significant fluid-dynamic forces on the same blades.

In order to improve in particular the distribution of the forces along the extension of the blades upon varying the angular position assumed by the latter and reduce the formation of the aforesaid undesired twisting torques on the blades, turbines have been developed of the abovementioned "Darrieus" type, described for example in the patents US 5,405,246, US 2010/322770 and US 2011/280708, in which the blades are fixed at their ends to the rotation shaft at angularly offset positions, in a manner so as to obtain a substantially helical longitudinal extension. In this manner, the blades are always subjected at at least one longitudinal section thereof, and at any angular position assumed by the blade, to a useful action by the fluid-dynamic forces produced by the wind.

Such blade geometry also allows a decrease of the noise caused by the rotor, since both the interaction between the blade and the wind and that between the blade and the tail of the shaft of the rotor are progressive, preventing irritating acoustic effects caused by sudden pressure variations in the field of motion around the blades.

The aforesaid turbines nevertheless have not allowed a particular improvement of the efficiency of transformation of the wind energy into mechanical energy of rotation of the turbine.

Known from the patent EP 1413748 is a vertical-axis turbine which comprises a plurality of blades having substantially helical longitudinal extension, each of which is connected to the rotation shaft by means of an upper end spoke, a lower end spoke and a plurality of intermediate spokes. More in detail, the upper and lower end spokes are connected to the ends of the blade itself by means of aerodynamic connector portions. The known turbine briefly described above nevertheless has low aerodynamic efficiency, since the numerous support spokes of the blades arranged therein, although provided with an aerodynamic profile, contribute to significantly increasing the wet surface area of the turbine itself and hence the viscous friction forces which act thereon. The patent DE 20 2008 014 838 describes a vertical-axis wind turbine provided with blades having substantially helical extension. Each blade is connected to the shaft of the turbine by means of a pair of spokes, including an upper spoke and a lower spoke connected to the ends of the blade itself by means of aerodynamic connector portions. Also the latter known turbine has low aerodynamic efficiency due to the same grounds illustrated for the turbine described in the patent EP 1413748. In addition, the latter known turbine is subjected to structural problems, since its blades are connected to the rotation shaft by means of only end spokes and are thus subjected to high bending stresses during the operation of the turbine.

Finally, known from the patent US 2012/0128500 is a vertical-axis turbine provided with a plurality of blades with helical extension, each of which is provided, at its upper end, with an aerodynamic appendage substantially obtained by bending the upper blade end towards the central rotation shaft. Such appendage substantially lies on a radial plane passing through the axis of the turbine and is susceptible to act as an aerodynamic brake during the rotation of the turbine itself.

Presentation of the invention

In this situation, the problem underlying the present invention is therefore that of overcoming the drawbacks shown by the solutions of known type described above, by providing a vertical-axis wind turbine and a blade for vertical-axis wind turbine, which allow improving the aerodynamic efficiency of the same blade, thus allowing the generation of a greater quantity of mechanical and thus electrical energy.

Another object of the present finding is to provide a vertical-axis wind turbine and a blade for vertical-axis wind turbine which produce low acoustic emissions with respect to the known turbines.

Another object of the present finding is to provide a vertical-axis wind turbine and a blade for vertical-axis wind turbine which are of easy self-starting type.

Another object of the present finding is to provide a vertical-axis wind turbine which is entirely safe in use.

Another object of the present finding is to provide a vertical-axis wind turbine which is simple and inexpensive to obtain and entirely reliable in operation.

Brief description of the drawings

These and still other objects are all attained by the turbine and by the blade, object of the present invention, whose technical characteristics can be clearly found in the contents of the below-reported claims, and the advantages thereof will be clearer in the following detailed description made with reference to the enclosed drawings, which represent a merely exemplifying and non-limiting embodiment of the invention, in which:

- Figure 1 shows a schematic view of one embodiment of the vertical-axis wind turbine, object of the present invention, provided with three blades which also form an object of the present invention;
- Figure 2 shows a perspective view of a first detail of a blade of the wind turbine of Fig. 1, relative to a part of a provided central body thereof;
- Figure 2a shows a perspective view of a part of the central body traversed by a secant plane;
- Figure 3 shows a perspective view of a second detail of a blade of the wind turbine of Fig. 1, relative to a provided appendage;
- Figures 4 and 5 respectively show a perspective view and a front view of an upper terminal portion of a blade of the wind turbine of Fig. 1;
- Figure 6 shows a perspective view of the lower terminal portion of a blade of the wind turbine of Fig. 1;
- Figure 7 shows a graph representative of the comparison between the power coefficients per blade height unit as a function of the height of the generic wing profile from the base of the blade of a turbine provided with blades lacking appendages (in a line marked with round points) and of a turbine of equal swept area having blades provided with appendages in accordance with the present invention (in a line marked with square points);
- Figures 8 and 9 respectively show a perspective view of an upper end of the central body of the blade of Fig. 2 and a perspective view of an upper terminal portion of a blade of the wind turbine in accordance with a different embodiment, with the appendage connected to the upper end of the central body of the blade by means of a connector portion;

- Figure 10 shows a front view of the upper terminal portion of the blade of Fig. 9;
- Figure 11 shows a graph representative of the comparison between the power coefficients per blade height unit as a function of the height of the generic wing profile from the base of the blade of a turbine provided with blades lacking appendages (in a line marked with round points) and of a turbine of equal swept area having blades provided with appendages in accordance with the embodiment illustrated in Figures 8-10 (in a line marked with square points).

Detailed description of a preferred embodiment

With reference to the set of drawings, reference number 3 indicates overall a preferred embodiment of a blade in accordance with the present invention, intended to be mounted in a vertical-axis wind turbine, also object of the present invention and indicated overall with reference number 1 in the enclosed drawings.

Such turbine 1 is of the type "with lift" and comprises a rotor formed by a central rotation shaft 2 with vertical axis Z and by two or more blades 3 adapted to transmit a rotation motion to the central rotation shaft 2, around the aforesaid vertical axis Z.

The turbine 1 can comprise, if it is adapted for the production of electrical energy - in an entirely conventional manner - means for converting the mechanical energy of the shaft 2 into electrical energy, such a generator possibly mechanically connected to the shaft by means of a reducer (not illustrated), which are *per se* known to the man skilled in the art and hence are not discussed in more detail hereinbelow.

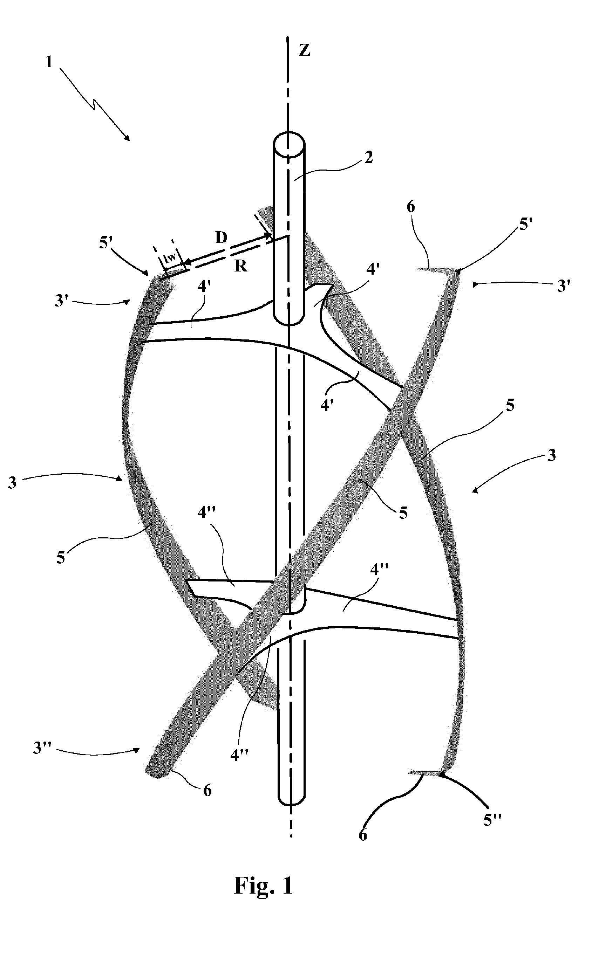

In accordance with the embodiment illustrated in the enclosed Figure 1, the turbine comprises three blades 3.

Each blade 3 is extended along a substantially helical longitudinal extension line 1 and is provided with an upper terminal portion 3' and a lower terminal portion 3", at which the blade 3 is mechanically coupled to the central rotation shaft 2 of the turbine 1, by means of at least one pair of spokes, 4' and 4". The latter are connected to the rotation shaft 2 in positions angularly offset with respect to each other.

In accordance with the idea underlying the present invention, each of the blades 3 comprises a central body 5 and two terminal appendages 6, connected to the central body 5 as is better explained hereinbelow.

The central body 5 is extended along the longitudinal extension line 1 and is provided with a section defining an aerodynamic profile P, i.e. a profile that is susceptible to produce a lift component aimed to conduct in rotation the central shaft 2 to which the blade 3 is fixed, when it is immersed in an air flow.

The principle that brings the turbine 1 in rotation due to the fluid-dynamic forces acting on the aerodynamic profile P of the blade 3 is well known to the man skilled in the art and thus will not be further discussed hereinbelow.

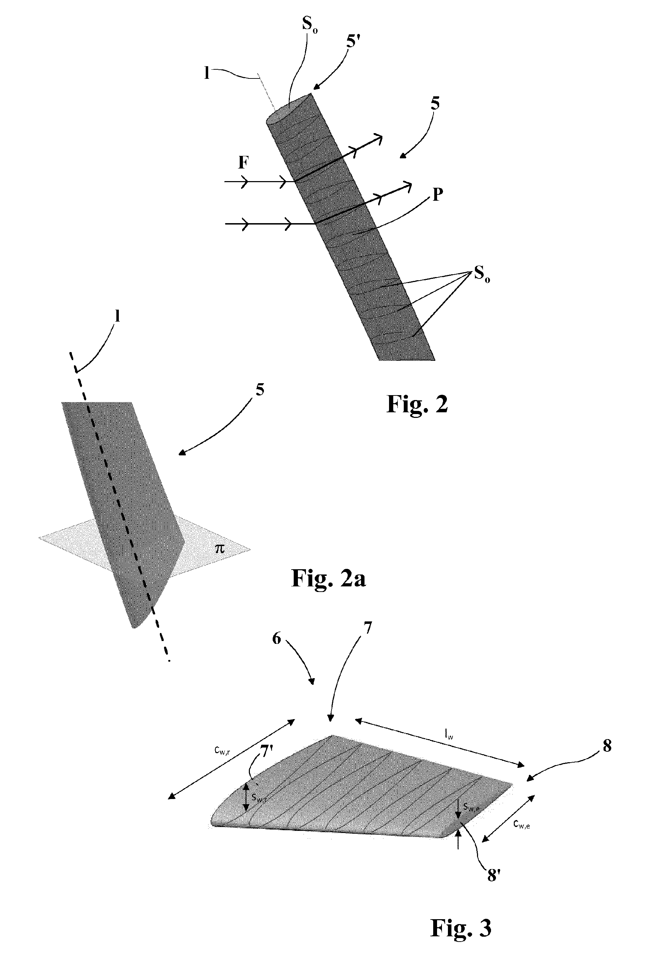

The fluid-dynamic characteristics of the blade 3 are affected, as is known, by the shape of its aerodynamic profile. In accordance with the present invention, the aerodynamic profile P of the central body 5 of each blade 3 is orthogonal to the longitudinal extension line 1 of the central body 5 itself, for the entire length of the latter, as is clearly visible in Fig. 2. More in detail, the aerodynamic profile P is defined by a plurality of sections So orthogonal to the longitudinal extension line 1. In particular, such orthogonal sections So have the desired aerodynamic form and are substantially constant along the longitudinal extension line 1.

Advantageously, the orthogonal sections So are thus distinguished by chords having the same length $c_p$, it being intended of course that the length of the chords of the different orthogonal sections So can vary slightly along the longitudinal extension line 1, in accordance with the manufacturing tolerances.

The prior art differently provides that the aerodynamic profile P is extended horizontally, i.e. is defined by a plurality of aerodynamic sections arranged orthogonal to the vertical axis Z of the rotation shaft 2, regardless of the tilt angle of the longitudinal extension line 1.

The fact that the blades 3 are provided, at their central body 5, with an aerodynamic profile P that is extended orthogonally with respect to the longitudinal extension line 1 for the entire length of the helical extension line 1 itself, and not over horizontal planes as is instead provided by the prior art, allows optimally exploiting the aerodynamic profile and thus improving the efficiency of the turbine itself.

It has indeed been experimentally proven that the flow lines F of the air that intercept a blade 3 are deflected by the latter according to a direction substantially orthogonal to the longitudinal extension line 1 of the blade 3, as schematically represented in Figure 2, i.e. according to a direction that coincides with the extension of the aerodynamic profile P of the central body 5 of the blade 3.

The aerodynamic profile P of the central body 5 of the blades 3 can for example be a profile of NACA type.

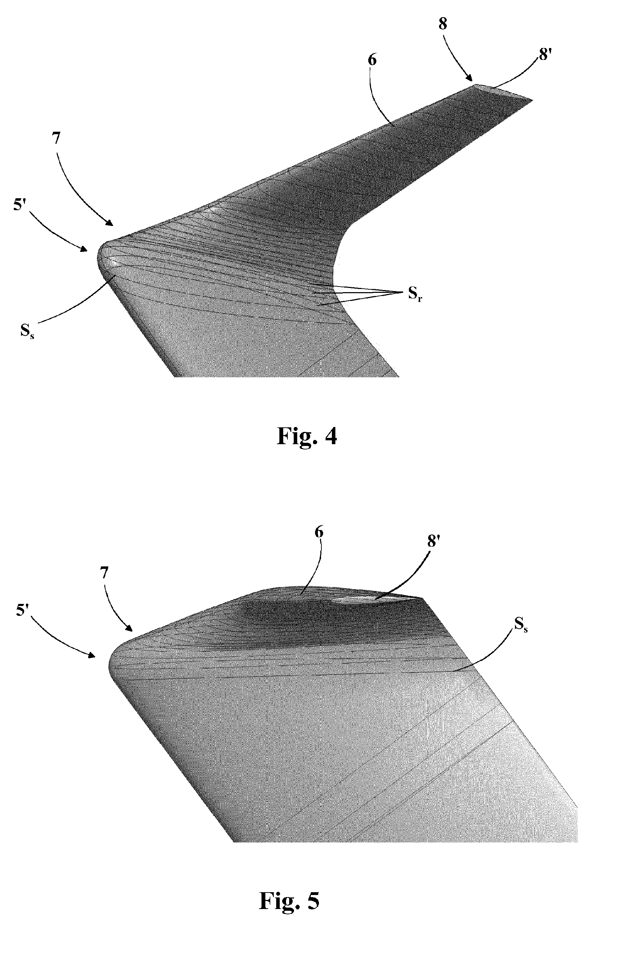

The central body 5 of each blade 3 is extended between an upper end 5', defined by a horizontal upper end section $S_s$ orthogonal to the vertical axis Z, and tilted with respect to the longitudinal extension line 1, as is inferred from Figures 4 and 5, and a lower end 5", defined by a horizontal lower end section ($S_i$), it too orthogonal to the vertical axis Z and tilted with respect to the longitudinal extension line 1.

More in detail, the horizontal upper end section $S_s$ and the horizontal lower end section $S_i$ are defined by

a cut of the central body 5 along a horizontal plane π, as illustrated in Figure 2a.

The orthogonal sections $S_o$ which define the aerodynamic profile P and which intersect the plane π are thus cut by the horizontal upper $S_s$ and lower $S_i$ end sections.

The two appendages 6 are respectively connected to the upper end 5' and lower end 5" of the central body 5 and are each extended along a radial direction R substantially orthogonal to the vertical axis Z of the turbine 1, towards the central rotation shaft 2. More in detail, the appendages 6 are linearly extended along the substantially horizontal radial direction R and are provided with cross sections, orthogonal to the radial extension direction R, defining respective aerodynamic profiles.

As is quite visible in particular in Fig. 5, the chords of the aerodynamic profiles that define each of the appendages 6 preferably lie on a same substantially horizontal plane. The appendages 6, being extended substantially orthogonal to the vertical axis Z of rotation of the turbine 1, interfere minimally with the air flows that hit the blades 3 and hence do not negatively affect the efficiency of the turbine 1. Otherwise, if they were arranged tilted with respect to the radial direction R and were not substantially orthogonal to the vertical axis Z, the appendages 6 would act as an aerodynamic brake, reducing the efficiency of the turbine 1.

With the expression "substantially orthogonal" employed above, it is intended herein to indicate that the appendages 6 are extended parallel to a radial direction R that forms an angle comprised between 85° and 95° with the vertical axis Z of the turbine 1.

Each appendage 6 is extended between a root end 7, defined by a root section 7', lying on a plane substantially vertical and orthogonal to the radial direction R, and a free end 8 defined by an end section 8'.

The appendages 6 are connected to the upper end 5' and lower end 5" of the central body 5 by means of respective connector portions 9, each of which extended between the horizontal upper end section $S_s$ or lower end section $S_i$ of the central body 5 and the root section 7' of the corresponding appendage 6.

The connector portions 9, therefore, connect the horizontal upper end $S_s$ or lower end sections $S_i$, which are arranged orthogonal to the vertical axis Z of the turbine, with the root sections 7' of the corresponding appendages 6, such root sections 7' extended on vertical planes parallel to the axis Z.

Hence, the connector portions 9 connect sections that are substantially orthogonal to each other.

Advantageously, each of the connector portions 9 is defined by a plurality of connector sections $S_r$ successive with respect to each other starting from the horizontal upper end section $S_s$ or lower end section $S_i$ of the central body 5 up to the root section 7' of the corresponding appendage 6.

Each of such connector sections $S_r$ has its own chord $c_r$ and is rotated with respect to the preceding connector section around its chord $c_r$, such that the connector sections $S_r$ successive with respect to each other starting from the horizontal upper end section $S_s$ or lower end section $S_i$ are arranged in positions gradually approximate to a position parallel to the substantially vertical lying plane of the root section 7' of the appendage 6. The connector sections $S_r$ therefore complete overall an angle of about 90°, in order to connect the horizontal upper end section $S_s$ or lower end section $S_i$ of the central body 5 with the substantially vertical root section 7' of the corresponding appendage 6. The presence of the appendages 6 allows reducing the resistance induced by the blades 3. Indeed, the appendages 6, even if they determine an increase of the overall surface of the blade 3 and hence an increase of the viscous resistance of the blade 3, allow reducing the end vortices generated by the air flows that are moved from the region in overpressure at the intrados blade towards the region in reduced pressure at the extrados blade. The presence in fact of a physical barrier constituted by the appendage 6 between the overpressure and reduced pressure zones allows obstructing the air flow, which would tend to flow from the intrados towards the extrados and which would generate a series of vortices that are separated from the trailing edge of the blade 3.

In order to best exploit the properties of the appendages 6, it is necessary to balance the benefits tied to the decrease of induced resistance, and hence to the increase of lift that follows, with the increase of viscous resistance due to the increase of the wet surface area of the blade.

For such purpose, the size of the root sections 7' and end sections 8' of the appendage 6, as well as the length $l_w$ and the maximum thicknesses $s_{w,r}$ and $s_{w,e}$ of the root and end sections of the appendage must be selected in a manner so as to ensure the minimum increase of viscous resistance corresponding with the desired decrease of induced resistance.

In accordance with a preferred embodiment, illustrated in the enclosed figures, the root section 7' of each of the appendages 6 is distinguished by a chord of length $c_{w,r}$ shorter than the length $c_p$ of the chord of the orthogonal sections So which define the aerodynamic profile P.

Advantageously, the length $c_{w,r}$ of the chord of the root section 7' of each of the appendages 6 is equal to 50%-70%, and preferably equal to about 60%, of the length $c_p$ of the chord of the orthogonal sections So which define the aerodynamic profile P.

The length $l_w$ of each of the appendages 6, defined as the distance between the root section 7' and the end section 8', is, in accordance with an advantageous embodiment of the present invention, equal to 75%-150% of the length $c_p$ of the chord of the orthogonal sections So.

In particular, the length $l_w$ of each of the appendages 6 is preferably substantially equal to the length $c_p$ of the chord of the orthogonal sections So.

The appendages 6 therefore have a length $l_w$ sufficient for reducing the formation of air vortices at the ends of the blades, but in any case limited, in order to prevent an excessive increase of the wet surface area of the blade and hence an excessive increase of its viscous resistance.

In particular, each of the appendages 6 has a length $l_w$ shorter than the distance D that separates the free end 8 of the appendage itself from the central rotation shaft 2 of the turbine 1.

The root section 7' of each of the appendages 6 is distinguished with a length $c_{w,r}$ of the chord, as well as by a maximum thickness $s_{w,r}$. Analogously, the end section 8' of each of the appendages 6 is distinguished by a length $c_{w,e}$ of the chord and by a maximum thickness $s_{w,e}$.

Advantageously, the chord of the end section 8' has a length $c_{w,e}$ equal to 40%-60%, and preferably equal to about 50%, of the length $c_{w,r}$ of the chord of the root section 7'. In addition, the maximum thickness $s_{w,e}$ of the end section 8' is advantageously equal to 40%-60%, and preferably equal to about 50%, of the maximum thickness $s_{w,r}$ of the root section 7'.

The above-indicated size ratios have proven to be particularly advantageous for ensuring a decrease of induced resistance, and hence an increase of lift, corresponding to a small increase of viscous resistance due to the increase of the wet surface area of the blade.

The configuration of the blades 3 in accordance with the aforesaid size ratios therefore ensures an optimal efficiency of the turbine 1 in accordance with the present invention.

In particular, as already previously specified, the blade 3 according to the present invention is extended along a longitudinal extension line 1 substantially helical around an axis Z, which coincides with the vertical axis of the turbine 1 when the blade 3 is mounted on the shaft 2 of the turbine 1.

The blade 3 according to the invention comprises a central body 5 that is extended along the longitudinal extension line 1 with an aerodynamic profile P orthogonal to the longitudinal extension line 1 and is extended between an upper end 5', defined by a horizontal upper end section $S_s$ orthogonal to the axis Z and tilted with respect to the longitudinal extension line 1, and a lower end 5", defined by a horizontal lower end section $S_i$, it too orthogonal to the vertical axis Z and tilted with respect to the longitudinal extension line 1.

The blade 3 further comprises, as specified above, two appendages 6 connected to the upper end 5' and lower end 5" of the central body 5, each of which extended along a radial direction R substantially orthogonal to the axis Z towards the axis Z itself, between a root end 7 defined by a root section 7', lying on a plane substantially vertical and orthogonal to the radial direction R, and a free end 8 defined by an end section 8'. The appendages 6 are connected to the upper end 5' and lower end 5" of the central body 5 by means of respective connector portions 9, each of which extended between the horizontal upper end section $S_s$ or lower end section $S_i$ of the central body 5 and the root section 7' of the corresponding appendage 6.

The presence of the appendages 6 on the blades 3 in accordance with the present invention therefore allows, as specified above, increasing the efficiency of the turbine 1 that carries the aforesaid blades mounted, as well as limiting the acoustic emissions, due to the particular orientation of the aerodynamic profile P of the central body 5 of the blades 3 and the particular structural characteristics of the appendages 6.

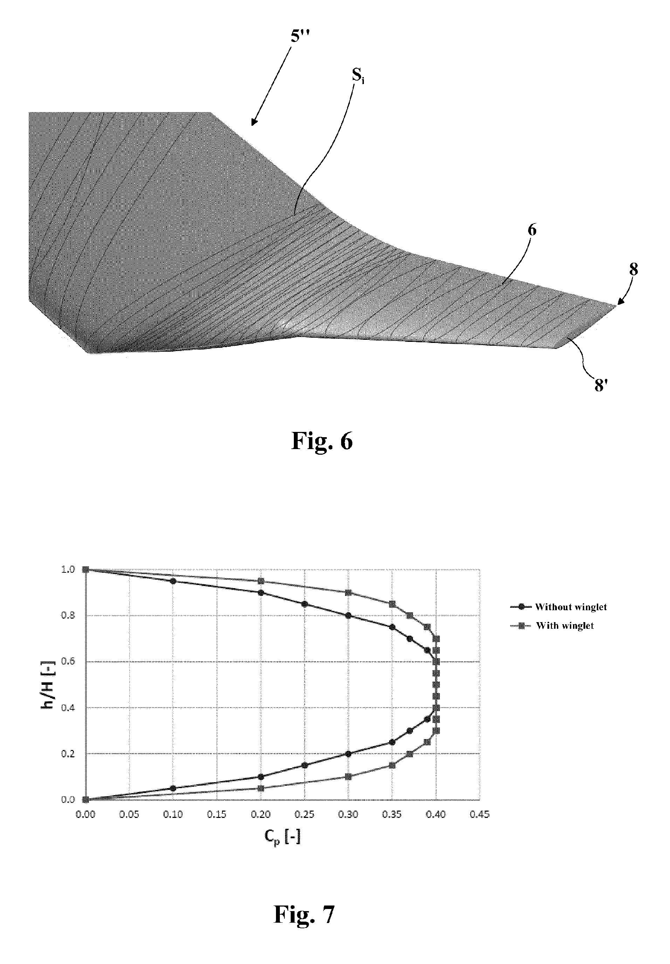

Merely by way of example, Figure 7 reports the comparison between the power coefficient per blade height unit, defined by the formula:

$$c_p = P / (\tfrac{1}{2}\, \rho\, A\, V^3)$$

where:

P is the power produced by the wind turbine per height unit;
p is the density of the air;
A is the area per height unit of the wind turbine; and
V is the speed of the wind that hits the wind turbine,

generated by a three-blade rotor without aerodynamic appendages (represented in the graph of Figure 7 with a line marked with round points) and that generated by the same machine where aerodynamic appendages have been applied in accordance with the present invention, as described above, H being the overall height of the rotor and h the vertical coordinate, zero at the lower end of the rotor and directed upward.

From the graph reported in Figure 7, it is clearly inferred that the presence of the aerodynamic end appendages reduces the loss of power that afflicts the end blade sections.

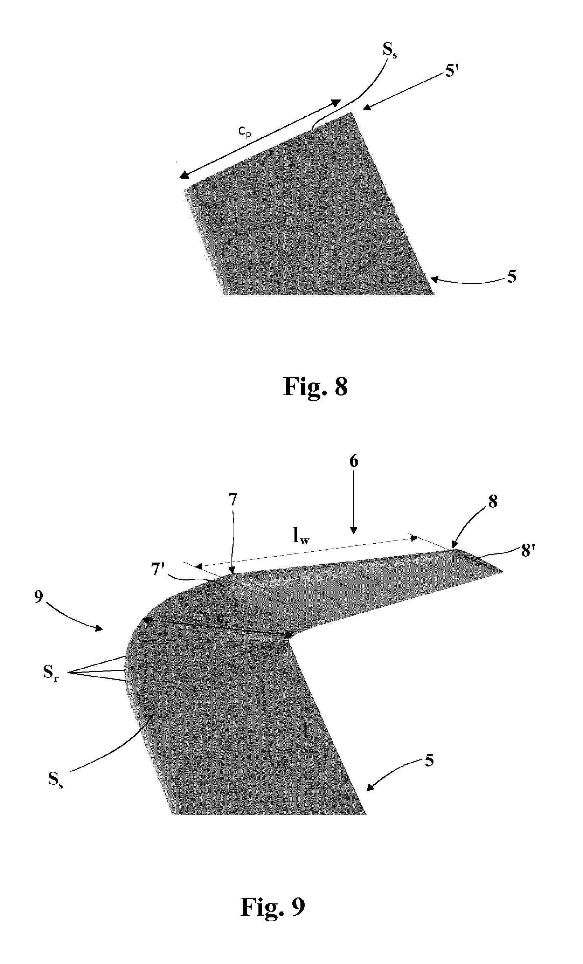

In accordance with a different embodiment solution of the blade 3 and the vertical-axis turbine 1 according to the present invention described hereinbelow and whose details are illustrated in Figures 8-11, the central body 5 of each blade 3 is extended between an upper end 5' defined by an aerodynamic upper end section $S_s$ orthogonal to the longitudinal extension line 1 and tilted with respect to the vertical axis Z and a lower end 5" defined by an aerodynamic lower end section orthogonal to the longitudinal extension line 1 and tilted with respect to the vertical axis Z. Each of the connector portions 9 is extended in such case between the aerodynamic upper end section $S_s$ or lower end section of the central body 5 and the root section 7' of the corresponding appendage 6.

The connector portions 9, therefore, connect the aerodynamic upper end section $S_s$ or lower end section, which is arranged orthogonal to the longitudinal extension line 1 of the blade 3 and then tilted with respect to the vertical axis Z of the turbine, with the root section 7' of the corresponding appendage 6, such root section 7' being extended on a vertical plane, orthogonal to the radial direction R and parallel to the axis Z. Advantageously, each of the connector portions 9 is defined by a plurality of connector sections $S_r$ successive with respect to each other starting from the aerodynamic upper end section $S_s$ or lower end section of the central body 5 up to the root section 7' of the corresponding appendage 6.

Each of such connector sections $S_r$ has its own chord $c_r$ and is rotated with respect to the preceding connector section around at least one first rotation axis R' substantially parallel to the radial direction R and/or around its chord $c_r$, such that the connector sections $S_r$ successive with respect to each other starting from the aerodynamic upper end section $S_s$ or lower end section are arranged in positions gradually approximate to a position parallel to the substantially vertical lying plane of the root section 7' of the appendage 6.

Preferably, the root section 7' of each of the appendages 6 is distinguished by a chord of length $c_{w,r}$ shorter than the length $c_p$ of the chord of the aerodynamic upper end section $S_s$ or lower end section and the connector sections $S_r$ have a chord $c_r$ of length progressively decreasing in moving away from the aerodynamic upper end section $S_s$ or lower end section.

Advantageously, the length $c_{w,r}$ of the chord of the root section 7' of each of the appendages 6 is equal to 50%-70%, and preferably equal to about 60%, of the length $c_p$ of the chord of the aerodynamic upper end section $S_s$ or lower end section.

The length $l_w$ of each of the appendages 6, defined as the distance between the root section 7' and the end section 8', is, in accordance with an advantageous embodiment of the present invention, equal to 75%-150% of the length $c_p$ of the chord of the aerodynamic upper end section $S_s$ or lower end section.

In particular, the length $l_w$ of each of the appendages 6 is preferably substantially equal to the length $c_p$ of the chord of the aerodynamic upper end section $S_s$ or lower end section.

Advantageously, the chord of the end section 8' has a length $c_{w,e}$ equal to 40%-60%, and preferably equal to about 50%, of the length $c_{w,r}$ of the chord of the root section 7'. In addition, also in accordance with the latter embodiment, the maximum thickness $s_{w,e}$ of the end section 8' is advantageously equal to 40%-60%, and preferably equal to about 50%, of the maximum thickness $s_{w,r}$ of the root section 7'.

The above-indicated size ratios have shown to be particularly advantageous in the latter embodiment of the blade in order to ensure a decrease of induced resistance, and hence an increase of lift, corresponding to a small increase of viscous resistance due to the increase of the wet surface area of the blade.

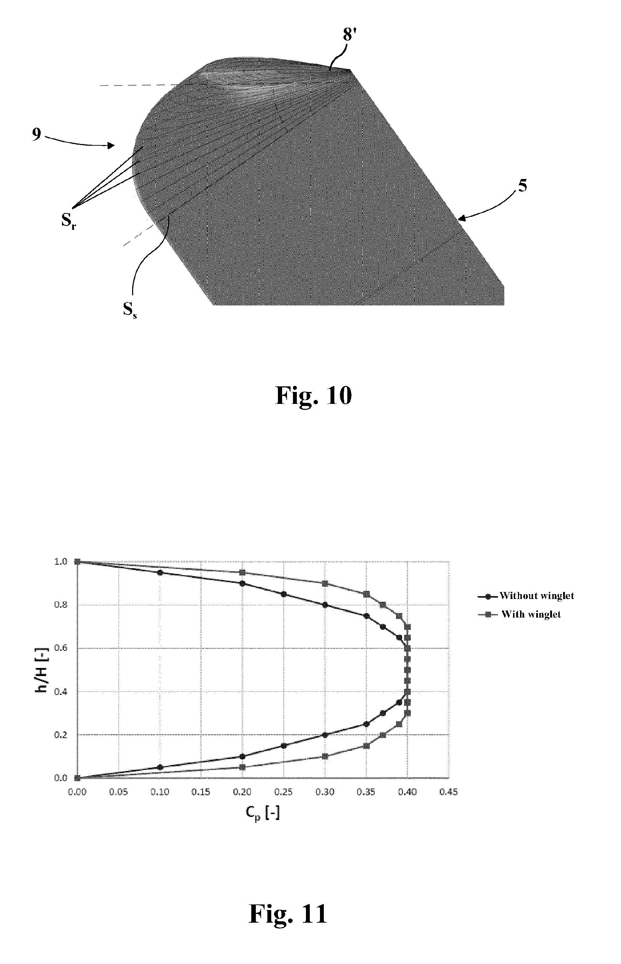

Merely by way of example, Figure 11 reports the comparison between the power coefficient per blade height unit, as previously defined in relation to Figure 7 (the same reference numbers are maintained in both figures), generated by a three-blade rotor without aerodynamic appendages (represented in the graph of Figure 11 with a line marked with round points) and that generated by the same machine where aerodynamic appendages were applied in accordance with the latter embodiment.

Also from the graph reported in Figure 11, it is clearly inferred that the presence of the aerodynamic end appendages reduces the loss of power that afflicts the end blade sections.

The finding thus conceived therefore reaches the pre-established objects. Of course, in the practical achievement thereof, it can also assume shapes and configurations different from that illustrated above, without departing from the present protective scope.

In addition, all details can be substituted by technically equivalent elements, and the shapes, size and materials used can be of any type in accordance with the requirements.

**Claims**

1. Blade for vertical-axis wind turbine, **characterized in that** it is extended along a longitudinal extension line (1) substantially helical around an axis (Z) and it comprises:

    - a central body (5) that is extended along said longitudinal extension line (1) with an aerodynamic profile (P) orthogonal to said longitudinal extension line (1), said central body (5) being extended between an upper end (5'), defined by a horizontal upper end section ($S_s$) orthogonal to said axis (Z), tilted with respect to said longitudinal extension line (1) and obtained by means of a cut of said aerodynamic profile (P) along a plane orthogonal to said axis (Z), horizontal when said blade (3) is mounted on a vertical-axis wind turbine (1), and a lower end (5"), defined by a horizontal lower end section ($S_i$) orthogonal to said axis (Z), tilted with respect to said longitudinal extension line (1) and obtained by means of a cutting of said aerodynamic profile (P) along a plane orthogonal to said axis (Z), horizontal when said blade (3) is mounted on a vertical-axis wind turbine (1), and
    - two appendages (6) respectively connected to the upper end (5') and lower end (5") of said central body (5) and each being extended along a radial direction (R) substantially orthogonal to said axis (Z) towards said axis (Z) itself starting from a root end (7) defined by a root section (7'), lying on a plane orthogonal to said radial direction (R) and substantially vertical when said blade (3) is mounted on a vertical-axis wind turbine (1);

said appendages (6) being connected to said upper end (5') and lower end (5") of said central body (5) by means of respective connector portions (9), each of said connector portions (9) being extended between said horizontal upper end section ($S_s$) or lower end section ($S_i$) of said central body (5) and said root section (7') of the corresponding appendage (6).

2. Blade for vertical-axis wind turbine according to claim 1, **characterized in that** each of said connector portions (9) is defined by a plurality of connector sections ($S_r$) successive with respect to each other starting from said horizontal upper end section ($S_s$) or lower end section ($S_i$) of said central body (5) towards said root section (7') of the corresponding appendage (6), each of which has its own chord ($c_r$) and is rotated with respect to the preceding connector section ($S_r$) around its chord ($c_r$), such that said connector sections ($S_r$) are arranged in positions gradually approximate to a position parallel to the substantially vertical lying plane of said root section (7') of the appendage (6).

3. Blade for vertical-axis wind turbine according to any one of the preceding claims, **characterized in that** said aerodynamic profile (P) is defined by a plurality of substantially constant sections (So) orthogonal to said longitudinal extension line (1), which are distinguished by a chord of the same length ($c_p$) and said root section (7') of each of said appendages (6) is distinguished by a chord of length ($c_{w,r}$) shorter than the length ($c_p$) of the chord of said orthogonal sections (So).

4. Blade for vertical-axis wind turbine according to any one of the preceding claims, **characterized in that** said aerodynamic profile (P) is defined by a plurality of substantially constant sections (So) orthogonal to said longitudinal extension line (1), which are distinguished by a chord of the same length ($c_p$) and said root section (7') of each of said appendages (6) is distinguished by a chord of length ($c_{w,r}$) equal to 50%-70%, and preferably equal to about 60% of the length ($c_p$) of the chord of said orthogonal sections (So).

5. Blade for vertical-axis wind turbine according to any one of the preceding claims, **characterized in that** said aerodynamic profile (P) is defined by a plurality of substantially constant sections (So) orthogonal to said longitudinal extension line (1), which are distinguished by a chord of the same length ($c_p$) and each of said appendages (6) is extended between said root end (7) defined by said root section (7') and a free end (8) defined by an end section (8'), the length of each of said appendages (6), defined as the distance between said root section (7') and said end section (8'), being equal to 75%-150% of the length ($c_p$) of the chord of said orthogonal sections (So).

6. Blade for vertical-axis wind turbine according to claim 5, **characterized in that** the length of each of said appendages (6) is substantially equal to the length ($c_p$) of the chord of said orthogonal sections ($S_o$).

7. Blade for vertical-axis wind turbine according to any one of the preceding claims, **characterized in that** each of said appendages (6) is extended between said root end (7) defined by said root section (7') and a free end (8) defined by an end section (8'), said root section (7') of each of said appendages (6) being distinguished by a chord of length ($c_{w,r}$) and said end section (8') of each of said appendages (6) being distinguished by a chord of length ($c_{w,e}$) equal to 40%-60%, and preferably equal to about 50%, of the length ($c_{w,r}$) of the chord of said root section (7').

8. Blade for vertical-axis wind turbine according to any one of the preceding claims, **characterized in that** each of said appendages (6) is extended between said root end (7) defined by said root section (7') and a free end (8) defined by an end section (8'), said root section (7') of each of said appendages (6) being distinguished by a maximum thickness ($s_{w,r}$) and said end section (8') of each of said appendages (6) being distinguished by a maximum thickness ($s_{w,e}$) equal to 40%-60%, and preferably equal to about 50%, of the maximum thickness ($s_{w,r}$) of said root section (7').

9. Vertical-axis wind turbine comprising a central rotation shaft (2) having a vertical axis (Z), **characterized in that** it comprises two or more blades (3) according to any one of the preceding claims angularly offset with respect to each other and adapted to transmit a rotation motion to said central rotation shaft (2) around said vertical axis (Z).

10. Vertical-axis wind turbine according to claim 9, **characterized in that** each of said blades (3) comprises:

- said central body (5) which is extended along said longitudinal extension line (1) with an aerodynamic profile (P) orthogonal to said longitudinal extension line (1) and tilted with respect to a horizontal reference plane, said central body (5) being extended between said upper end (5'), defined by a horizontal upper end section ($S_s$) orthogonal to said vertical axis (Z), tilted with respect to said longitudinal extension line (1) and obtained by means of a cutting of said aerodynamic profile (P) along a horizontal plane, and said lower end (5 "), defined by said horizontal lower end section ($S_i$) orthogonal to said vertical axis (Z), tilted with respect to said longitudinal extension line (1) and obtained by means of a cutting of said aerodynamic profile (P) along a horizontal plane, and

- said two appendages (6) respectively connected to the upper end (5') and lower end (5") of said central body (5) and each being extended along said radial direction (R) substantially orthogonal to said axis (Z) vertical towards said central rotation shaft (2) starting from said root end (7) defined by said root section (7'), lying on a plane substantially vertical and orthogonal to said radial direction (R);

said appendages (6) being connected to said upper end (5') and lower end (5") of said central body (5) by means of respective connector portions (9), each of said connector portions (9) being extended between said horizontal upper end section ($S_s$) or lower end section ($S_i$) of said central body (5) and said root section (7') of the corresponding appendage (6).

**Fig. 1**

**Fig. 2**

**Fig. 2a**

**Fig. 3**

**Fig. 4**

**Fig. 5**

**Fig. 6**

**Fig. 7**

**Fig. 8**

**Fig. 9**

**Fig. 10**

**Fig. 11**

Europäisches
Patentamt

European
Patent Office

Office européen
des brevets

# EUROPEAN SEARCH REPORT

Application Number

EP 13 19 6130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 413 748 A1 (DIXI HOLDING B V [NL]) 28 April 2004 (2004-04-28) * abstract * * paragraph [0016] * * paragraph [0022] * * figures 1,2 * | 1,2,4,6, 7,9,10 | INV. F03D3/06 |
| X | DE 20 2008 014838 U1 (ANDRICH DETLEF [DE]; LORK MARTIN [DE]) 15 January 2009 (2009-01-15) * paragraph [0010] * * paragraph [0020] - paragraph [0021] * * figure 1 * | 1-10 | |
| X | US 2012/128500 A1 (PERLESS ROBERT [US] ET AL) 24 May 2012 (2012-05-24) * paragraph [0007] - paragraph [0008] * * paragraph [0024] - paragraph [0031] * * paragraph [0036] - paragraph [0041] * * figures 1,4,7 * | 1-10 | |
| A | WO 2005/061173 A1 (GCK TECHNOLOGY INC [US]; PALLEY IGOR [US]) 7 July 2005 (2005-07-07) * abstract * * paragraph [0020] - paragraph [0024] * * paragraph [0027] * * figures 1,2,3,5,6 * | 1-10 | TECHNICAL FIELDS SEARCHED (IPC) F03D |
| A | FR 2 865 777 A1 (INST NAT POLYTECH GRENOBLE [FR]) 5 August 2005 (2005-08-05) * page 6, line 15 - page 7, line 24 * * page 8, line 1 - page 9, line 3 * * figures 1,2,3 * | 1-10 | |

The present search report has been drawn up for all claims

| Place of search | Date of completion of the search | Examiner |
|---|---|---|
| The Hague | 27 March 2014 | Westermayer, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 19 6130

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2014

| Patent document cited in search report | | Publication date | Patent family member(s) | | Publication date |
|---|---|---|---|---|---|
| EP 1413748 | A1 | 28-04-2004 | NONE | | |
| DE 202008014838 | U1 | 15-01-2009 | NONE | | |
| US 2012128500 | A1 | 24-05-2012 | NONE | | |
| WO 2005061173 | A1 | 07-07-2005 | AU 2003291807 A1 | | 14-07-2005 |
| | | | WO 2005061173 A1 | | 07-07-2005 |
| FR 2865777 | A1 | 05-08-2005 | AT 517253 T | | 15-08-2011 |
| | | | DK 1718863 T3 | | 26-09-2011 |
| | | | EP 1718863 A1 | | 08-11-2006 |
| | | | FR 2865777 A1 | | 05-08-2005 |
| | | | WO 2005075819 A1 | | 18-08-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009257885 A
- US 7997875 B
- US 8029241 B
- US 1835018 A
- US 5405246 A
- US 2010322770 A
- US 2011280708 A
- EP 1413748 A
- DE 202008014838
- US 20120128500 A